# EUROPEAN PATENT SPECIFICATION

(11) **EP 1 630 438 B1**
(45) Date of publication and mention of the grant of the patent: **10.10.2007**
(21) Application number: 05255274.2
(22) Date of filing: 26.08.2005
(51) Int. Cl.: F16D 13/75

(54) **Clutch device for vehicle**
Kraftfahrzeugkupplungseinrichtung
Dispositif à embrayages pour véhicule

(30) Priority: 27.08.2004 JP 2004247796
(43) Date of publication of application: 01.03.2006
(73) Proprietor: HONDA MOTOR CO., Ltd., Tokyo 107-8556 (JP)
(72) Inventor: Koyama, Shigeru Kabushiki Kaisha Honda, Wako-shi Saitama-ken 351-0193 (JP); Nemoto, Keiji Kabushiki Kaisha Honda, Wako-shi Saitama-ken 351-0193 (JP)
(74) Representative: Piésold, Alexander James

(56) References cited:
- WO-A-03/081073
- US-A- 4 640 400
- US-A- 5 570 768

## Description

The present invention relates generally to a clutch device for a vehicle, and more particularly to a vehicular clutch device having a wear compensating mechanism.

In this kind of clutch device, the wear of facings of a clutch disk is generally accompanied by a change in position of a diaphragm spring, causing an increase in operational force (load on a clutch cover) required to disengage a clutch. It is therefore necessary to replace the clutch disk when the amount of wear of the clutch facings becomes a certain value or more. Extension of the time for replacement of the clutch disk, i.e., extension of the life of the clutch has conventionally been desired. In achieving a long life of the clutch, it is important to increase an effective working thickness of the clutch facings (friction members).

There has been proposed in many Patent Documents, such as document US 4640400, a clutch having a wear compensating mechanism with a slope cam structure in a rotational direction between a pressure plate and a diaphragm spring. In the conventional wear compensating mechanism of the clutch mentioned above, a slope cam positioning structure is configured by stepwise means. Accordingly, a clutch disengagement point is not always constant. Further, since the wear compensating mechanism is located in the rotational direction, a structure for converting a rotational movement into an axial movement is required.

It is therefore an object of the present invention to provide a clutch device for a vehicle having a simple wear compensating mechanism reduced in number of parts.

In accordance with an aspect of the present invention, there is provided a clutch device for a vehicle including a flywheel rotating integrally with a crankshaft of an engine, a friction disk opposed to the flywheel and connected to an input shaft of a transmission, a pressure plate for pressing the friction disk against the flywheel, and a diaphragm spring for applying a pressure load to the pressure plate. The pressure plate is composed of a first pressure plate and a second pressure plate separated from each other. The first pressure plate comes into pressure contact with the friction disk in engaging a clutch. The second pressure plate abuts against the diaphragm spring to receive the pressure load from the diaphragm spring. The clutch device includes a first wear following pin inserted in a hole of the flywheel and engaged with the first pressure plate so as to permit a given axial stroke of the first pressure plate. The first wear following pin is pushed toward the flywheel by the first pressure plate in engaging the clutch. The clutch device further includes second wear following pin inserted in holes of the first and second pressure plates. The second wear following pin is pushed toward the first pressure plate by the second pressure plate in engaging the clutch. The first wear following pin includes a one-way pin permitted to move toward the flywheel and inhibited from moving away from the flywheel. The second wear following pin includes a one-way pin permitted to move away from the first pressure plate and inhibited from moving toward the first pressure plate.

According to the clutch device as defined above, wear compensation can be directly performed by only the first and second wear following pins working in the axial direction, thereby reducing the number of parts. Further, wear compensation can be performed at any time, so that the clutch disengaging point becomes always constant.

In accordance with the features of dependent claim 2 the first wear following pin includes a first pin fully inserted in the hole of the flywheel, a second pin partially inserted in the hole of the flywheel, and a first coil spring interposed between the first pin and the second pin. The first pin has a first taper surface tapering from the first pressure plate toward the flywheel. The second pin has a second taper surface complementary to the first taper surface. The second taper surface abuts against the first taper surface. The second wear following pin includes a third pin fully inserted in the hole of the first pressure plate, a fourth pin partially inserted in the hole of the first pressure plate and fully inserted in the hole of the second pressure plate, and a second coil spring interposed between the third pin and the fourth pin. The third pin has a third taper surface tapering from the first pressure plate toward the second pressure plate. The fourth pin has a fourth taper surface complementary to the third taper surface. The fourth taper surface abuts against the third taper surface.

According to the clutch device as defined above, the specific configurations of the first and second wear following pins are clarified and effects similar to those of the clutch device as defined in claim 1 can be exhibited.

The above and other objects, features and advantages of the present invention and the manner of realizing them will become more apparent, and the invention itself will best be understood from a study of the following description and appended claims with reference to the attached drawings showing some preferred embodiments of the invention.
FIG. 1 is a plan view of a part of a clutch device according to a preferred embodiment of the present invention;
FIG. 2 is a cross section taken along the line A-A in FIG. 1;
FIG. 3 is a cross section taken along the line B-B in FIG. 1;
FIG. 4 is a cross section taken along the line X-O in FIG. 1;
FIG. 5 is a cross section taken along the line Y-O in FIG. 1;
FIG. 6 is a cross section taken along the line Z-O in FIG. 1;
FIG. 7 is a cross section taken along the line Y-O in FIG. 1 in disengaging the clutch; and
FIG. 8 is a cross section taken along the line Z-O in FIG. 1 in disengaging the clutch.

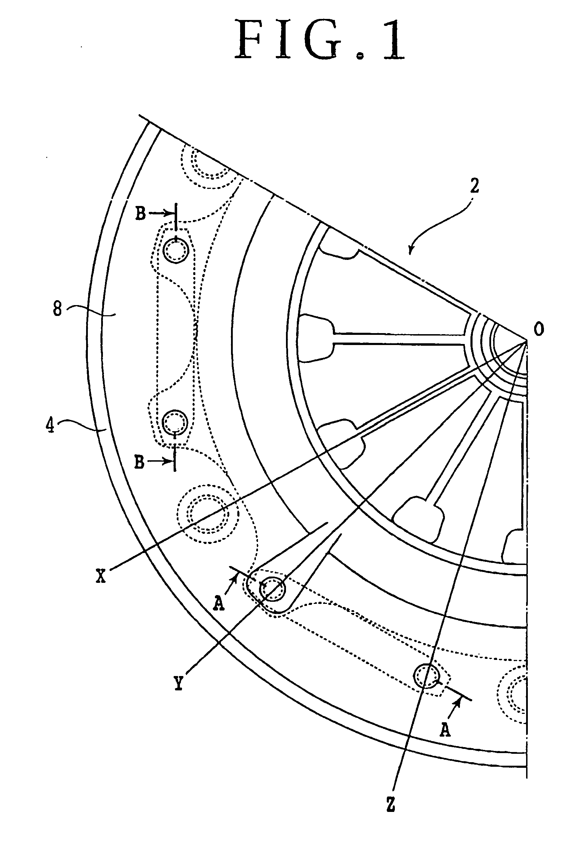

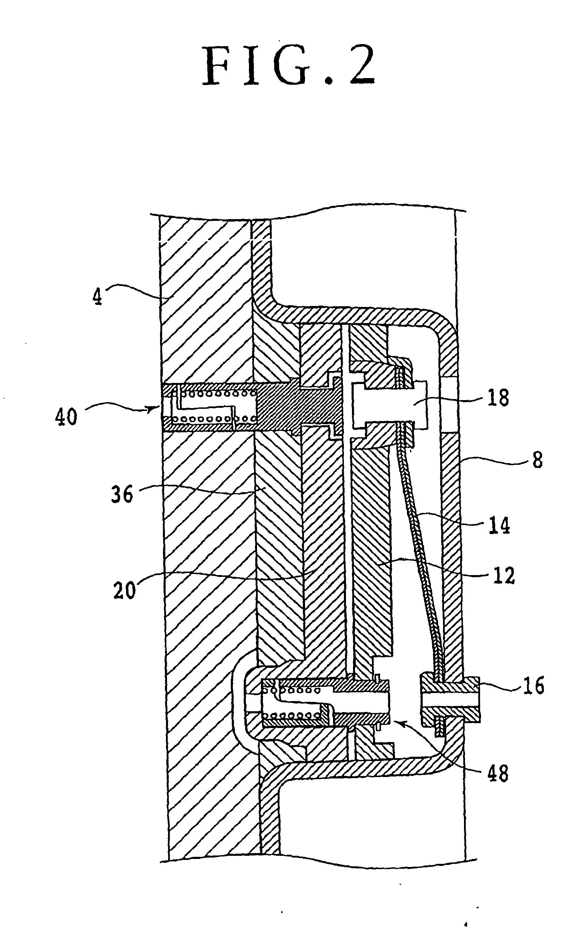

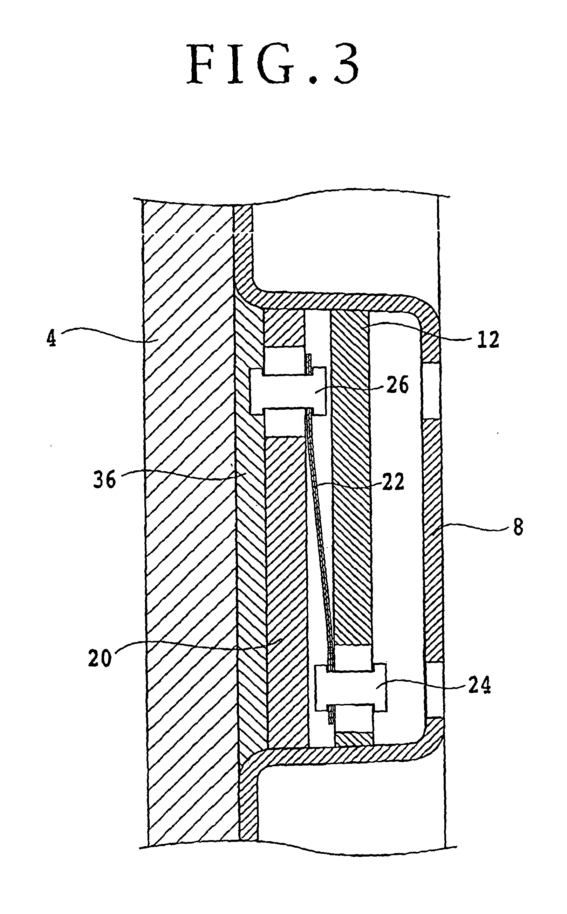

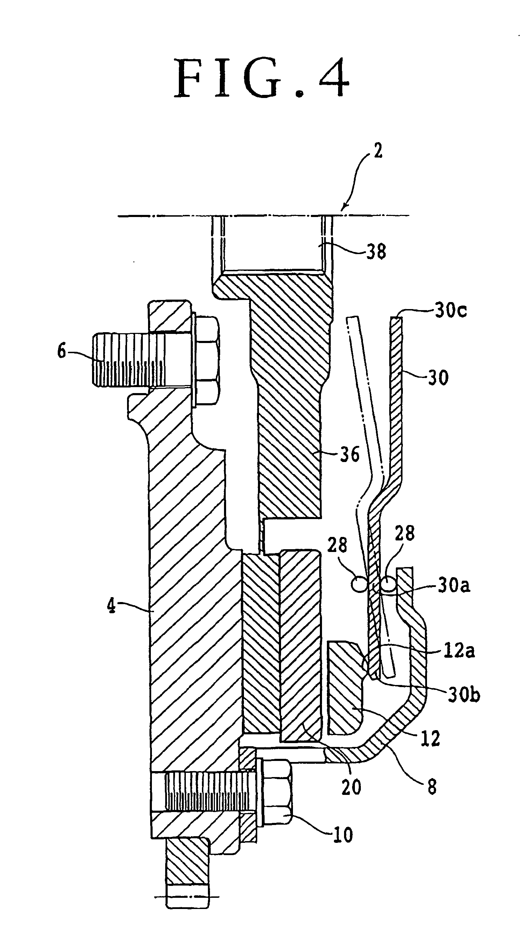

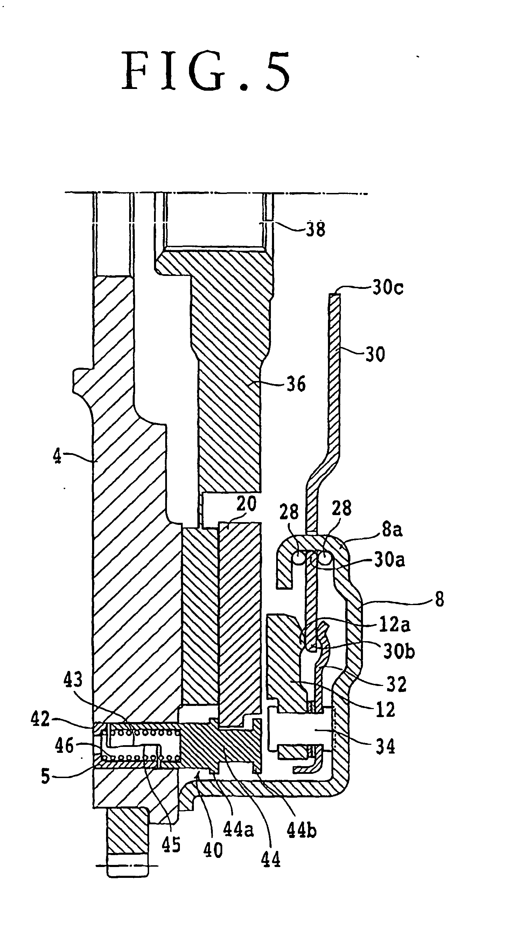

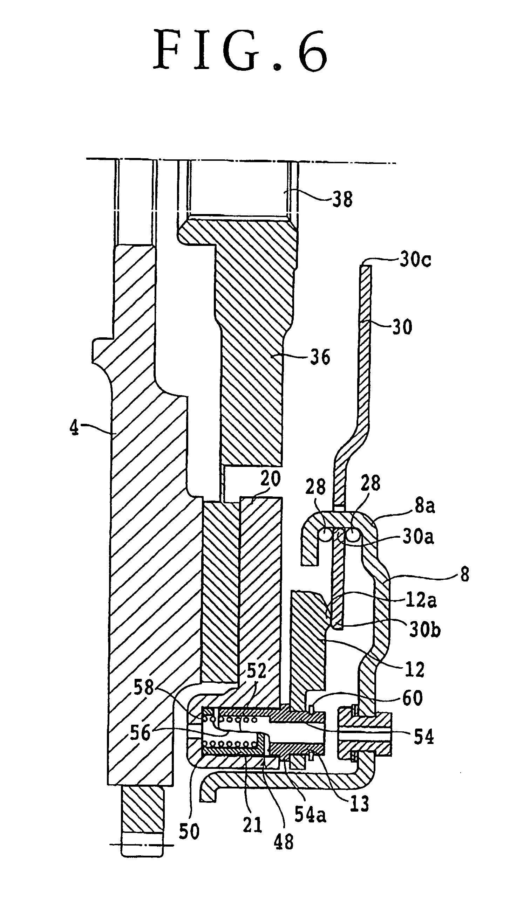

Referring to FIG. 1, there is shown a plan view of a part of a clutch device according to a preferred embodiment of the present invention. FIG. 2 is a cross section taken along the line A-A in FIG. 1. FIG. 3 is a cross section taken along the line B-B in FIG. 1. FIG. 4 is a cross section taken along the line X-O in FIG. 1. FIG. 5 is a cross section taken along the line Y-O in FIG. 1. FIG. 6 is a cross section taken along the line Z-O in FIG. 1.

Referring to FIG. 4, a flywheel 4 of a clutch 2 is fixed to a crankshaft of an engine (not shown) by bolts 6, so that the flywheel 4 is rotated integrally with the crankshaft. A clutch cover 8 is fixed to the flywheel 4 by bolts 10. As shown in FIG. 2, a strap plate 14 is fixed at its opposite ends to the clutch cover 8 and a second pressure plate 12 respectively by rivets 16 and 18, thereby axially movably mounting the second pressure plate 12 to the clutch cover 8.

As shown in FIG. 3, a strap plate 22 is fixed at its opposite ends to the second pressure plate 12 and a first pressure plate 20 respectively by rivets 24 and 26, thereby axially movably mounting the first pressure plate 20 to the second pressure plate 12. As shown in FIG. 5. the clutch cover 8 is formed at its inner circumferential end with an annular bent portion 8a. A pair of rings 28 are mounted on the annular bent portion 8a of the clutch cover 8. A diaphragm spring 30 is mounted on the clutch cover 8 in such a manner that an intermediate portion 30a of the diaphragm spring 30 is sandwiched between the pair of rings 28.

The second pressure plate 12 has an annular projection 12a, and an outer circumferential portion 30b of the diaphragm spring 30 abuts under pressure against the annular projection 12a of the second pressure plate 12. More specifically, in a normal condition, the diaphragm spring 30 is biased in such a manner that the outer circumferential portion 30b of the diaphragm spring 30 abuts under pressure against the annular projection 12a of the second pressure plate 12 by leverage about the fulcrum 30a sandwiched between the pair of rings 28.

A clip 32 is fixed at its base end to the second pressure plate 12 by a rivet 34, and the outer circumferential portion 30b of the diaphragm spring 30 is held by the clip 32. A hub 38 of a clutch disk (friction disk) 36 is spline-connected to the vicinity of a front end portion of an input shaft of a transmission (not shown) so as to be axially slidable and relatively nonrotatable. FIGS. 2 to 6 show a clutch-on condition (an engaged condition of the clutch 2). Although not shown, facings (friction members) are fixed to both surfaces of the clutch disk 36.

As shown in FIG. 5, a first wear following pin 40 is partially inserted in a hole 5 formed through the flywheel 4. The first wear following pin 40 is composed of a first pin 42 and a second pin 44 separated from each other. The first pin 40 has a first taper surface 43 tapering from the first pressure plate 20 toward the flywheel 4. The second pin 44 has a second taper surface 45 complementary to the first taper surface 43 of the first pin 42. The second pin 44 is partially inserted in the hole 5 of the flywheel 4 in such a manner that the second taper surface 45 of the second pin 44 abuts against the first taper surface 43 of the first pin 42.

A coil spring 46 for exerting a biasing force in the axial direction of the first wear following pin 40 is interposed between the first pin 42 and the second pin 44 of the first wear following pin 40. A pair of annular projections 44a and 44b are formed on an end portion of the second pin 44 so as to be axially spaced apart from each other. An outer circumferential portion of the first pressure plate 20 is inserted between the annular projections 44a and 44b of the second pin 44 with given axial play. Accordingly, the first pressure plate 20 is permitted to axially move by a given stroke defined by the spacing between the annular projections 44a and 44b of the second pin 44.

As shown in FIG. 6, a second wear following pin 48 is inserted in a hole 21 formed on the first pressure plate 20 and a hole 13 formed through the second pressure plate 12. The second wear following pin 48 is composed of a third pin 50 and a fourth pin 54 separated from each other. The third pin 50 has a third taper surface 52 tapering from the first pressure plate 20 toward the second pressure plate 12. The fourth pin 54 has a fourth taper surface 56 complementary to the third taper surface 52 of the third pin 50. The fourth pin 54 is partially inserted in the hole 21 of the first pressure plate 20 in such a manner that the fourth taper surface 56 of the fourth pin 54 abuts against the third taper surface 52 of the third pin 50.

A coil spring 58 for exerting a biasing force in the axial direction of the second wear following pin 48 is interposed between the third pin 50 and the fourth pin 54 of the second wear following pin 48. The fourth pin 54 has an annular projection 54a. In the clutch-on condition shown in FIG. 6, the second pressure plate 12 is kept in pressure contact with the annular projection 54a of the fourth pin 54 by the biasing force of the diaphragm spring 30. The fourth pin 54 further has a clip 60 functioning as a stopper for preventing the disengagement of the pin 54 from the hole 13 of the second pressure plate 12.

The operation of the preferred embodiment mentioned above will now be described. In the clutch-on condition where the clutch 2 is engaged as shown in FIG. 6, the outer circumferential portion 30b of the diaphragm spring 30 abuts under pressure against the second pressure plate 12 leftwardly as viewed in FIG. 6. The pressure of abutment of the diaphragm spring 30 against the second pressure plate 12 is transmitted through the second wear following pin 48 to the first pressure plate 20. At this time, the fourth pin 54 is urged by the second pressure plate 12, so that the outer diameter of the second wear following pin 48 tends to be increased by the wedge effect obtained by the third taper surface 52 and the fourth taper surface 56.

However, the outer diameter of the second wear following pin 48 cannot be increased because the second wear following pin 48 is inserted in the hole 21 of the first pressure plate 20. Further, a frictional resistance is generated between the second wear following pin 48 and the hole 21 by a normal reaction generated by the wedge effect, so that the positional relation between the second pressure plate 12 and the first pressure plate 20 is maintained. Accordingly, the first pressure plate 20 operates to press the clutch disk (friction disk) 36 against the flywheel 4, thereby engaging the clutch 2. Although not shown, facings (friction members) known in the art are fixed to both surfaces of the clutch disk 36.

At this time, the second pin 44 of the first wear following pin 40 is pushed toward the flywheel 4 by the first pressure plate 20 as shown in FIG. 5, so that the outer diameter of the first wear following pin 40 tends to be decreased by the wedge effect obtained by the first taper surface 43 and the second taper surface 45. However, such a decrease in the outer diameter of the first wear following pin 40 is suppressed by the coil spring 46. Accordingly, the whole of the first wear following pin 40 is moved toward the flywheel 4. This means that when the facings of the clutch disk 36 are worn, the first wear following pin 40 is automatically moved toward the flywheel 4.

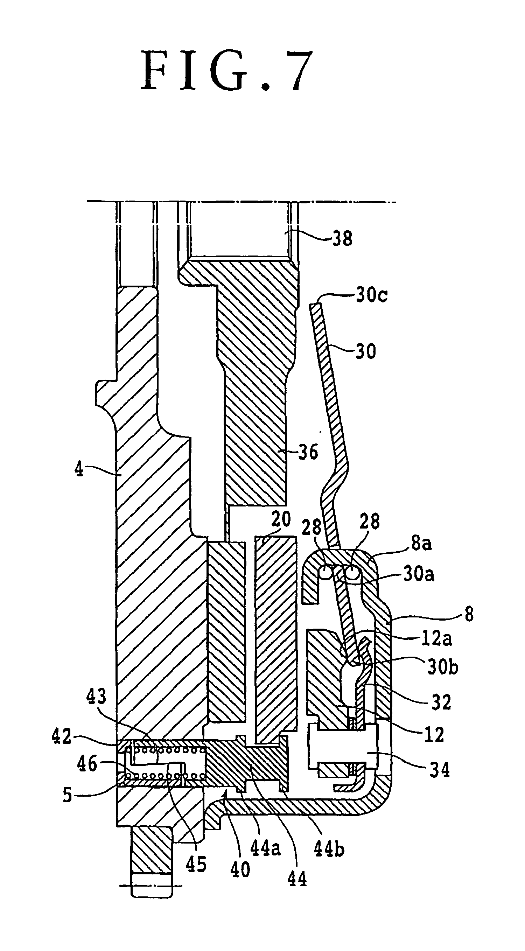

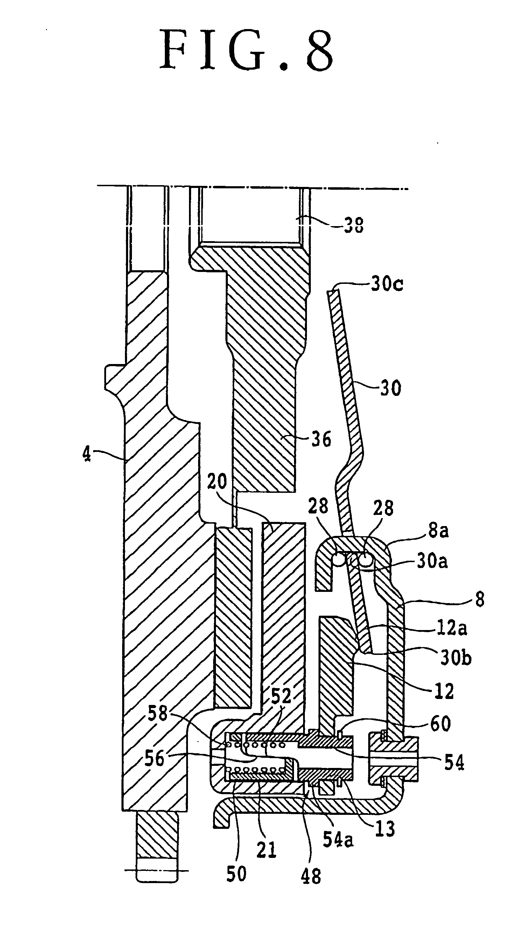

The operation of this preferred embodiment in disengaging the clutch 2 will now be described with reference to FIGS. 7 and 8. FIG. 7 is a cross section taken along the line Y-O in FIG. 1 in disengaging the clutch 2, and FIG. 8 is a cross section taken along the line Z-O in FIG. 1 in disengaging the clutch 2. When a release bearing (not shown) is slid, the inner circumferential portion 30c of the diaphragm spring 30 is depressed leftward as viewed in FIGS. 7 and 8, so that the diaphragm spring 30 is pivotally rotated about the fulcrum 30a in the counterclockwise direction as shown in FIG. 8. As a result, the biasing force of the diaphragm spring 30 to the second pressure plate 12 is removed, and the second pressure plate 12 is moved rightward as viewed in FIGS. 7 and 8.

As shown in FIG. 3, the first pressure plate 20 is connected through the strap plate 22 to the second pressure plate 12- Accordingly, when the second pressure plate 12 is moved rightward as viewed in FIGS. 7 and 8, the first pressure plate 20 is pulled by the strap plate 22 to move rightward as viewed in FIGS. 7 and 8, so that the first pressure plate 20 is separated from the clutch disk 36, thus disengaging the clutch 2. However, the outer circumferential portion of the first pressure plate 20 is inserted between the pair of annular projections 44a and 44b of the first wear following pin 40 with the given axial play. Accordingly, the axial movement of the first pressure plate 20 is limited within the range defined between the pair of annular projections 44a and 44b.

In other words, when the first pressure plate 20 is moved rightward as viewed in FIG. 7, the outer diameter of the first wear following pin 40 tends to be increased by the wedge effect of the first and second taper surfaces 43 and 45 of the first wear following pin 40. However, such an increase in outer diameter of the first wear following pin 40 is inhibited by the flywheel 4, so that the first wear following pin 40 cannot be moved toward the clutch cover 8. If the second pressure plate 12 is further moved rightward from the position shown in FIG. 7, the outer diameter of the second wear following pin 48 tends to be decreased by the wedge effect of the third and fourth taper surfaces 52 and 56 of the second wear following pin 48.

However, such a decrease in outer diameter does not occur, but the whole of the second wear following pin 48 is urged rightward by the coil spring 58 to partially move out of the hole 21 of the first pressure plate 20 as shown in FIG. 8. With this arrangement, the clearance between the friction disk 36 and the first pressure plate 20 in the fully rotated condition of the diaphragm spring 30 can be maintained at a constant value irrespective of the thickness of the friction disk 36, that is, irrespective of the degree of wear of the facings provided on both surfaces of the friction disk 36, thereby realizing a wear compensating mechanism.

## Claims

1. A clutch device for a vehicle including a flywheel (4) rotating integrally with a crankshaft of an engine, a friction disk (36) opposed to said flywheel and connected to an input shaft of a transmission, a pressure plate for pressing said friction disk against said flywheel, and a diaphragm spring (30) for applying a pressure load to said pressure plate,
said pressure plate being composed of a first pressure plate (20) and a second pressure plate (12) separated from each other, said first pressure plate (20) coming into pressure contact with said friction disk (36) in engaging a clutch, said second pressure plate (12) abutting against said diaphragm spring (30) to receive the pressure load from said diaphragm spring;
a first wear following pin (40) inserted in a hole of said flywheel (4) and engaged with said first pressure plate (20) so as to permit a given axial stroke of said first pressure plate (20), said first wear following pin (40) being pushed toward said flywheel (4) by said first pressure plate (20) in engaging the clutch said clutch device **characterised by**
a second wear following pin (48) inserted in holes of said first (20) and second pressure (12) plates, said second wear following pin (48) being pushed toward said first pressure plate (20) by said second pressure plate (12) in engaging the clutch,
wherein said first wear following pin (40) includes a one-way pin permitted to move toward said flywheel (4) and inhibited from moving away from said flywheel (4);
said second wear following pin (48) includes a one-way pin permitted to move away from said first pressure plate (20) and inhibited from moving toward said first pressure plate (12).

2. The clutch device according to claim 1, wherein:
said first wear following pin (40) comprises a first pin (42) fully inserted in said hole of said flywheel (4), said first pin (42) having a first taper surface (43) tapering from said first pressure plate (20) toward said flywheel (4), second pin (44) partially inserted in said hole of said flywheel (4), said second pin (44) having a second taper surface (45) complementary to said first taper surface (43), said second taper surface (45) abutting against said first taper surface (43) and a first coil spring interposed between said first pin (42) and said second pin (44) and
said second wear following pin (48) comprises a third pin fully (50) inserted in said hole of said first pressure plate (20) said third pin having (50) a third taper surface (52) tapering from said first pressure plate (20) toward said second pressure plate (12), a fourth pin (54) inserted in said hole of said first pressure plate (20) and said hole of said second pressure plate (12), said fourth pin (54) having a fourth taper surface (56) complementary to said third taper surface (52), said fourth taper surface (56) abutting against said third taper surface (52), and a second coil (58) spring interposed between said third pin (50) and said fourth pin (54).

## Patentansprüche

1. Kupplungseinrichtung für ein Fahrzeug, welche ein Schwungrad (4) zum integralen Drehen mit einer Kurbelwelle eines Motors, eine Reibscheibe (36) gegenüberliegend dem Schwungrad, und welche mit einer Antriebswelle eines Getriebes verbunden ist, eine Druckplatte zum Drücken der Reibscheibe gegen das Schwungrad und eine Membranfeder (30) zum Aufbringen einer Druckbelastung auf die Druckplatte umfasst,
wobei die Druckplatte aus einer ersten Druckplatte (20) und einer zweiten Druckplatte (12), welche voneinander getrennt sind, gebildet wird, wobei die erste Druckplatte (20) in Druckkontakt mit der Reibscheibe (36) beim Einrücken der Kupplung gelangt, wobei die zweite Druckplatte (12) gegen die Membranfeder (30) anstößt, um die Druckbelastung von der Membranfeder aufzunehmen;
wobei ein erster Abnutzungsfolgestift (40) in ein Loch des Schwungrads (4) eingesetzt ist und mit der ersten Druckplatte (20) in Eingriff steht, um so einen vorgegebenen axialen Hub der ersten Druckplatte (20) zu erlauben, wobei der erste Abnutzungsfolgestift (40) in Richtung des Schwungrads (4) durch die erste Druckplatte (20) beim Einrücken der Kupplung gedrückt wird, wobei die Kupplungseinrichtung **gekennzeichnet ist durch**
einen zweiten Abnutzungsfolgestift (48), welcher in Löcher der ersten (20) und zweiten (12) Druckplatten eingesetzt ist, wobei der zweite Abnutzungsfolgestift (48) in Richtung der ersten Druckplatte (20) **durch** die zweite Druckplatte (12) beim Einrücken der Kupplung gedrückt wird,
wobei der erste Abnutzungsfolgestift (40) einen Einwegstift umfasst, welchem erlaubt wird, sich in Richtung des Schwungrads (4) zu bewegen, und welcher daran gehindert wird, sich von dem Schwungrad (4) wegzubewegen,
wobei der zweite Abnutzungsfolgestift (48) einen Einwegstift umfasst, welchem erlaubt wird, sich weg von der ersten Druckplatte (20) zu bewegen, und welcher daran gehindert wird, sich in Richtung der ersten Druckplatte (12) zu bewegen.

2. Die Kupplungseinrichtung gemäß Anspruch 1, wobei:
der erste Abnutzungsfolgestift (40) einen ersten Stift (42) umfasst, welcher vollständig in das Loch des Schwungrads (4) eingesetzt ist, wobei der erste Stift (42) eine erste sich verjüngende Oberfläche (43) aufweist, welche sich von der ersten Druckplatte (20) in Richtung des Schwungrads (4) verjüngt, einen zweiten Stift (44), welcher teilweise in das Loch des Schwungrads (4) eingesetzt ist, wobei der zweite Stift (44) eine zweite sich verjüngende Oberfläche (45) aufweist, welche komplementär zu der ersten sich verjüngenden Oberfläche (43) ist, wobei die zweite sich verjüngende Oberfläche (45) gegen die erste sich verjüngende Oberfläche (43) anstößt und eine erste Schraubenfeder zwischen dem ersten Stift (42) und dem zweiten Stift (44) eingefügt ist, und
wobei der zweite Abnutzungsfolgestift (48) einen dritten Stift (50) umfasst, welcher vollständig in das Loch der ersten Druckplatte (20) eingesetzt ist, wobei der dritte Stift (50) eine dritte sich verjüngende Oberfläche (52) aufweist, welche sich von der ersten Druckplatte (20) in Richtung der zweiten Druckplatte (12) verjüngt, einen vierten Stift (54), welcher in das Loch der ersten Druckplatte (20) und das Loch der zweiten Druckplatte (12) eingesetzt ist, wobei der vierte Stift (54) eine vierte sich verjüngende Oberfläche (56), welche komplementär zu der dritten sich verjüngenden Oberfläche (52) ist, wobei die vierte sich verjüngende Oberfläche (56) gegen die dritte sich verjüngende Oberfläche (52) anstößt, und eine zweite Schraubenfeder (58) aufweist, welche zwischen dem dritten Stift (50) und dem vierten Stift (54) eingefügt ist.

## Revendications

1. Dispositif d'embrayage de véhicule comprenant un volant (4) tournant solidairement d'un vilebrequin d'un moteur, un disque de friction (36) faisant face audit volant et relié à un arbre d'entrée d'une transmission, un plateau de pression pressant ledit disque de friction contre ledit volant, et un diaphragme (30) appliquant une charge de pression audit plateau de pression,
ledit plateau de pression se composant d'un premier plateau de pression (20) et d'un second plateau de pression (12) séparés l'un de l'autre, ledit premier plateau de pression (20) entrant en contact par pression avec ledit disque de friction (36) en embrayant, ledit second plateau de pression (12) s'appuyant contre ledit diaphragme (30) pour recevoir la charge de pression dudit diaphragme;
une goupille suiveuse d'usure (40) insérée dans un trou dudit volant (4) et en prise avec ledit premier plateau de pression (20) afin de permettre une course axiale donnée dudit premier plateau de pression (20), ladite goupille suiveuse d'usure (40) étant poussée vers ledit volant (4) par ledit premier plateau de pression (20) en embrayant; ledit dispositif d'embrayage étant **caractérisé par**
une seconde goupille suiveuse d'usure (48) insérée dans des trous desdits premier (20) et second (12) plateaux de pression, ladite seconde goupille suiveuse d'usure (48) étant poussée vers ledit premier plateau de pression (20) par ledit second plateau de pression (12) en embrayant,
dans lequel ladite première goupille suiveuse d'usure (40) comprend une goupille unidirectionnelle autorisée à se déplacer vers ledit volant (4) et empêchée de s'éloigner dudit volant (4);
ladite seconde goupille suiveuse d'usure (48) comprend une goupille unidirectionnelle autorisée à s'éloigner dudit premier plateau de pression (20) et empêchée de se déplacer vers ledit premier plateau de pression (20).

2. Dispositif d'embrayage selon la revendication 1, dans lequel :
ladite première goupille suiveuse d'usure (40) comprend une première goupille (42) entièrement insérée dans ledit trou dudit volant (4), ladite première goupille (42) ayant une première surface biseautée (43) allant en diminuant dudit premier plateau de pression (20) vers ledit volant (4), une seconde goupille (44) partiellement insérée dans ledit trou dudit volant (4), ladite seconde goupille (44) ayant une seconde surface biseautée (45) complémentaire de ladite première surface biseautée (43), ladite seconde surface biseautée (45) s'appuyant contre ladite première surface biseautée (43) et un premier ressort hélicoïdal interposé entre ladite première goupille (42) et ladite seconde goupille (44); et
ladite seconde goupille suiveuse d'usure (48) comprend une troisième goupille (50) entièrement insérée dans ledit trou dudit premier plateau de pression (20), ladite troisième goupille (50) ayant une troisième surface biseautée (52) allant en diminuant du premier plateau de pression (20) vers ledit second plateau de pression (12), une quatrième goupille (54) insérée dans ledit trou dudit premier plateau de pression (20) et dans ledit trou dudit second plateau de pression (12), ladite quatrième goupille (54) ayant une quatrième surface biseautée (56) complémentaire de ladite troisième surface biseautée (52), ladite quatrième surface biseautée (56) s'appuyant contre ladite troisième surface biseautée (52), et un deuxième ressort hélicoïdal (58) interposé entre ladite troisième goupille (50) et ladite quatrième goupille (54).
